# EUROPÄISCHE PATENTSCHRIFT

(11) **EP 0 315 070 B1**
(45) Veröffentlichungstag und Bekanntmachung des Hinweises auf die Patenterteilung: **13.10.1993**
(21) Anmeldenummer: 88117990.7
(22) Anmeldetag: 28.10.1988
(51) Int. Cl.: C09J 131/04, C08L 31/04

(54) **Wässriger Kontaktkleber auf Basis von EVA-Copolymeren**
Water-based pressure-sensitive adhesive containing EVA copolymers
Adhésif piézosensible à base d'eau contenant des copolymères EVA

(30) Priorität: 05.11.1987 DE 3737630
(43) Veröffentlichungstag der Anmeldung: 10.05.1989
(73) Patentinhaber: Henkel Kommanditgesellschaft auf Aktien, 40191 Düsseldorf (DE)
(72) Erfinder: Tamm, Horst, D-5657 Haan (DE); Knop, Franz-Bernhard, Dr., D-4019 Monheim-Blee (DE); Kirchner, Claus, D-4000 Düsseldorf 12 (DE)

(56) Entgegenhaltungen:
- DE-A- 1 569 948
- DE-A- 3 244 755
- US-A- 4 654 388
- US-E- 23 164
- CHEMICAL ABSTRACTS, Band 84, Nr. 14, 5. April 1976, Seite 44, Spalte 1, Zusammenfassung Nr. 91129x, Columbus, Ohio, US; & JP-A-75 28 095

## Beschreibung

Die Erfindung betrifft einen wäßrigen Kontaktkleber auf Basis von EVA-Copolymeren.

Kontaktkleber sind Klebstoffe, die auf beiden Seiten der durch Klebung zu verbindenden Substrate aufgetragen werden und nach Ausbildung eines abgetrockneten Klebstoffilms beim Zusammenfügen der Substrate unter Druck sofort eine hohe Klebefestigkeit, d.h. einen hohen initialen Tack, entwickeln.

Kontaktkleber bestehen üblicherweise aus Kunstkautschuken, z.B. 2-Chlorbutadien-polymeren und Harzen, die in organischen Lösemitteln gelöst werden. Darüber hinaus enthalten sie weitere Zusätze, z.B. Stabilisatoren, Viskositätsregulatoren und dergleichen. Der mitunter hohe, im Bereich von 70 bis 80 % liegende Gehalt an Löse- und Verdünnungsmitteln, die teilweise toxisch und/oder leicht entflammbar sind, hat zu Versuchen Anlaß gegeben, Kontaktkleber auf wäßriger Basis zu entwickeln.

Auf der Basis von Chlorbutadienlatices (Chloroprenlatices) hergestellte Kontaktkleber ergeben jedoch nicht die Klebefestigkeiten, die mit Chloropren-Lösemittel-Kontaktklebern erreichbar sind. Versuchsweise eingesetzte Acrylatcopolymere in Form von Dispersionen für Kontaktkleber zeigen jedoch mehr Haftklebstoffcharakter und "kalten Fluß", was sich z.B. so auswirkt, daß sich ein um die Nase einer vorstehenden Treppenkante geklebter störrischer Nadelfilzbelag mit der Zeit wieder aufrichtet.

Weiterhin bekannt sind Dispersionen auf Ethylen-Vinylacetatbasis, die als Rohstoffe für wäßrige Kontaktkleber vorgeschlagen wurden, z.B. gemäß DE-OS 32 44 755. Mit diesen Ausgangsprodukten lassen sich zwar Kontaktkleber herstellen, die jedoch nur eine geringe Klebefestigkeit oder nur eine geringe Adhäsivität zu den verklebenden Materialien besitzen.

Bisher auf Basis angebotener Rohstoffe formulierte wäßrige Kontaktkleber besitzen entweder unzureichende Adhäsivität oder Kohäsion. Worauf es offensichtlich ankommt, ist, daß der wäßrige Kontaktkleber im Moment des Klebens, d.h. des Vereinigens der mit dem Klebstoff applizierten Materialien, genügende Adhäsivität besitzt, die nach dem Klebevorgang zurückgeht und einer höheren Kohäsivität Platz macht. Der Wechsel von adhäsiver zu kohäsiver Phase muß ähnlich schnell wie bei Kontaktklebern auf Lösemittelbasis erfolgen.

Es wurde nun gefunden, daß als Rohstoffe für Kontaktkleber angebotene Ethylen-Vinylacetat-Copolymerdispersionen, die selbst nur geringe Adhäsivität und Kontaktklebrigkeit besitzen, bereits durch kleine Mengen von Lösemitteln als Zusätze zu entsprechenden Polymerdispersionen in Anwesenheit von Harzen als klebeverstärkenden Stoffen ("Tackifier") die genannte reversible Adhäsivität ergeben.

Demgemäß ist die Erfindung auf einen wäßrigen Kontaktkleber auf Basis von EVA-Copolymeren gerichtet, der durch einen Gehalt an
a) EVA-Copolymeren mit einem Ethylengehalt von 23 bis 27 Gew. -% in Form wäßriger Dispersionen mit einem Feststoffgehalt von 40 bis 70 Gew.-%, wobei die EVA-Copolymere bis zu 3 Gew.-% einer weiteren Copolymerkomponente enthalten können,
b) 2 bis 15 Gew.-%, insbesondere 5 bis 10 Gew.-%, bezogen auf EVA-Copolymere, eines Harzes als "Tackifier" und
c) mit Wasser nicht mischbaren Lösemitteln in einer Menge von 0,1 bis 5 Gew.-%, bezogen auf das Gesamtgewicht der Dispersion,
   sowie gegebenenfalls
d) üblichen Additiven wie Konservierungs-, Oxidations-, Verdickungs- und Thixotropierungsmitteln sowie Emulgatoren und Schutzkolloiden,
gekennzeichnet ist.

Die erfindungsgemäß einzusetzenden EVA-Copolymeren mit einem Ethylengehalt von 23 bis 27 Gew.-% sind handelsüblich. Sofern ihr Einsatz für Kontaktkleber vorgeschlagen wurde, enthielten diese Rezepturen jedoch entweder keine Harze als "Tackifier", keine mit Wasser nicht mischbaren Lösemittel und/oder einen zu hohen Gehalt an Terpolymerenkomponenten. Bei geringeren Anteilen an Ethylen in den erfindungsgemäß einzusetzenden Copolymeren erzielt man keine zufriedenstellende Kontaktklebrigkeit; bei höheren Ethylengehalten dagegen resultiert nach dem Abtrocknen, d.h. nach der Filmbildung, ein oberflächenklebriger Klebstoffilm, dessen Klebung die Erscheinung des kalten Flusses zeigt.

Die in dem wäßrigen Kontaktkleber der Erfindung enthaltenen "Tackifier" sind die für PVAc- und EVA-Kleber üblichen Harze, insbesondere die natürlichen Balsamharze, Derivate derselben, z.B. dimerisierte, disproportionierte und hydrierte Harze, Glycerin- und Pentaerythritester der Balsamharze und ihrer vorgenannten Derivate, Tallharze, den genannten Balsamharzderivaten analoge Tallharzderivate, Kohlenwasserstoffharze, Polyterpenharze, Cumaron-Inden-Harze und dergleichen.

Als mit Wasser nicht mischbare Lösemittel können diejenigen eingesetzt werden, die in der Lage sind, die vorgenannten Polymere zu lösen und deren Dampfdruck oder Migrationsbereitschaft für eine Entfernung aus dem abgebundenen Klebstoffilm sorgt, insbesondere Aromaten, Chlorkohlenwasserstoffe und Ester. So zeigt z.B. Xylol bzw. eine 70 %-ige Lösung von Balsamharz in Xylol eine starke Adhäsivitätssteigerung bei den erfindungsgemäß einzusetzenden EVA-Dispersionen. Nun ist zwar bekannt, daß Lösemittelzusätze bzw. Zusätze von Harzlösungen die Adhäsivität von Klebstoffen verbessern. Viele Klebstoffe, z.B. für die industrielle Herstellung von Verpackungsmitteln, erhalten demgemäß geringe oder größere Zusätze an organischen Lösemitteln zur Beschleunigung des Abbindeprozesses. Fußbodenbelagskleber enthalten z.B. Lösungen von Naturharzen in Aromaten zur Verbesserung des Naßanzugsvermögens, d.h. des Tacks. Es handelte sich hier jedoch nicht um Kontaktkleber, d.h. es kam nicht auf die reversible Adhäsivitätssteigerung bei einem an sich stark kohäsiven, für Kontaktklebstoffe geeigneten Polymeren an.

Der wäßrige Kontaktkleber der Erfindung kann zusätzlich übliche Additive wie Konservierungs-, Oxidationsschutz-, Verdickungs- und Thixotropierungsmittel sowie Emulgatoren und Schutzkolloide enthalten. Als Emulgatoren und Schutzkolloide dienen z.B. die bei Dispersionen üblichen Substanzen, z.B. oberflächenaktive Mittel, Polyvinylalkohol, Cellulosederivate und dergleichen.

Gemäß einer bevorzugten Ausführungsform der Erfindung enthalten die wäßrigen Kontaktkleber der Erfindung bis zu 5 Gew.-%, insbesondere bis zu 3 Gew.-% an anorganischen und/oder weniger als 1 Gew.-% an organischen Pigmenten, jeweils bezogen auf das Gesamtgewicht des Kontaktklebers. Die Einhaltung dieser Begrenzung ist insbesondere für anorganische Pigmente wichtig, die gleichzeitig auch Füllstoffe sind, z.B. Titanweiß und Ruß. Größere Mengen an Füllstoffen sind für die Kontaktkleber der Erfindung nachteilig und daher nicht vorgesehen.

Gemäß einer weiteren vorteilhaften Ausführungsform der Erfindung beträgt die Teilchengröße der EVA-Copolymere in der Dispersion 0,5 bis 5 Mikrometer und der Feststoffgehalt der Dispersion 50 bis 65 Gew.-%.

Gemäß einer weiteren vorteilhaften Ausführungsform der Erfindung enthalten die wäßrigen Kontaktkleber der Erfindung als mit Wasser nicht mischbare Lösungsmittel solche aus der von Essigsäure-(3-methoxy-n-butyl)ester und Glykolsäure-n-butylester gebildeten Gruppe. Diese Lösemittel stellen nach heutiger Erkenntnis keine Gefahrstoffe dar und werden geruchlich nicht als unangenehm und belästigend empfunden. Bevorzugt setzt man sie in Mengen von 1 bis 5 Gew.-%, bezogen auf das Gesamtgewicht der Dispersion, ein.

Gemäß einer weiteren vorteilhaften Ausführungsform der Erfindung weisen die den wäßrigen Kontaktklebern zuzusetzenden Harze einen Schmelzpunkt von mindestens 60°C auf. Man erhält dann den erwünschten Klebstoffilm ohne Oberflächenklebrigkeit. Die gegebenenfalls in den EVA-Polymeren enthaltenen Terpolymerenkomponenten sind vorzugsweise aus der von Crotonsäure und N-Methylolacrylamid gebildeten Gruppe ausgewählt.

Die Erfindung ist weiterhin auf ein Verfahren zur Herstellung eines wäßrigen Kontaktklebers der obengenannten Art gerichtet, wobei das Harz sowohl als Lösung als auch in Form einer Schmelze der Dispersion zugesetzt werden kann. Bevorzugt verfährt man jedoch so, daß man das Harz und das mit Wasser nicht mischbare Lösemittel getrennt oder zusammen in die auf eine Temperatur oberhalb des Schmelzpunktes des Harzes erwärmte wäßrige Dispersion des EVA-Copolymeren, getrennt oder zusammen mit den übrigen Additiven, gibt. Dabei erzielt man entweder bessere Ergebnisse hinsichtlich der Adhäsivität oder kommt mit geringeren Mengen an Lösemittel bzw. Harzen aus. Zudem kommt es bei der kombinierten Anwendung von Lösemitteln, Harzen und Wärme zum "Aufbrechen" stark kohäsiver (insbesondere kristallisierter) Bereiche in stark kohäsiven Polymeren.

Die Harzmenge, die dem EVA-Polymer zugesetzt wird, beträgt vorzugsweise 5 bis 10 %. Bei Zusatz niedrig-schmelzender Harze - bei Schmelzpunkt bzw. Erweichungspunkten des Harzes bzw. der Harzgemische unter den obengenannten 60°C - sollte sich der Harzzusatz im unteren Empfehlungsbereich, d.h. bei 2 bis 5 %, bewegen.

Die Erfindung betrifft weiterhin die Verwendung von EVA-Copolymeren mit einem Ethylengehalt von 23 bis 27 Gew.-% in Form wäßriger Dispersionen mit einem Feststoffgehalt von 40 bis 70 Gew.-%, insbesondere 50 bis 65 Gew.-%, wobei die EVA-Copolymeren bis zu 3 Gew.-% einer weiteren Copolymerkomponente enthalten können, zur Ausbildung von Substratbeschichtungen.

Es hat sich gezeigt, daß so vorbeschichtete Substratbeschichtungen durch Kontakt mit frisch aufgetragenem erfindungsgemäßem Kontaktklebstoff regeneriert werden können. Zum Beispiel gelingt es, vorbeschichtete Fußbodenbeläge auf einseitig auf den Untergrund applizierten Kontaktklebstoff zu pressen, um eine gute Kontaktklebung zu erzielen.

Die Erfindung wird im folgenden anhand von bevorzugten Ausführungs- und Vergleichsbeispielen näher erläutert.

### Beispiel 1.

Zu 100 Gewichtsteilen einer EVA-Dispersion mit 60 % Festkörpergehalt, Teilchengröße mitteldispers (0,3 bis 5 Mikrometer), pH-Wert 4 bis 5, Viskosität (Brookfield RVT 20°C, Spindel 5, 20 UpM) ca. 6000 mPas, Ethylen/Vinylacetatverhältnis ca. 25/75 %, wurden 8,6 Gew.-Teile einer 70 %-igen Lösung eines nichtkristallisierenden portugiesischen Balsamharzes (Erweichungspunkt 70 bis 80°C, Säurezahl 162 bis 175) in Xylol unter Rühren zugesetzt. Weiterhin wurden dem Klebstoff, bezogen auf die Basisdispersion, 0,03 Gew.-Teile 1,2-Benzoisothiazolin-2-on als Konservierungsmittel und 0,20 Gew.-Teile Hydroxypropylguar als Verdickungsmittel sowie 2,7 Gew.-Teile Xylol zugesetzt.

Man erhielt einen leicht applizierbaren, transparent auftrocknenden Kontaktklebstoff mit den Spezifikationen
- Festkörpergehalt:: ca. 60 %
- Viskosität:: (Brookfield Spindel 5, 10 UpM) 34000 mPas
- Ablüftezeit:: ca. 30 Minuten (gemessen bei 23°C, 55 % rel. Luftfeuchte, bei dichtem Untergrund)
- Zahnspachtelauftrag:: 200 - 300 g/m² (Zahnspachtel A3 der TKB mit Zahnlückenweiten von 1,5 mm, Zahnlückentiefen von 1,65 mm und Zahnbrückenbreiten von 0,5 mm).

### Beispiel 2.

Zu 100 Gew.-Teilen der EVA-Dispersion nach Beispiel 1 wurden 2 Gew.-Teile 3-Methoxy-n-butylacetat gegeben und das Gemisch auf ca. 60°C erwärmt. In diese Mischung ließ man unter ständigem Rühren eine ca. 80°C warme Harzschmelze, bestehend aus 2 Gew.-Teilen eines bei Raumtemperatur flüssigen Harzderivates (Weichharz; Tallharz-Triethylenglykolester) und 3 Gew.-Teilen eines Balsamharzes nach Beispiel 1 zulaufen. Das Gemisch wurde unter Zusatz von 0,03 Gew.-Teilen 1,2-Benzoisothiazolin-2-on konserviert.

Man erhielt einen leicht applizierbaren, transparent auftrocknenden Kontaktklebstoff mit den Spezifikationen:
- pH-Wert:: 4,2
- Festkörpergehalt:: ca. 60 %
- Viskosität:: 14000 mPas (Brookfield Spindel 5, 5 UpM)
- Ablüftezeit:: ca. 30 min
(gemessen bei 23°C, 55 % rel. Luftfeuchte, dichter Untergrund, Zahnspachtelauftrag 220 g/m², Zahnspachtel A3 (s.o.)).

### Vergleichsbeispiel 1.

Es wurde eine EVA-Dispersion nach Beispiel 1 direkt als Kontaktkleber eingesetzt.

### Vergleichsbeispiel 2.

Es wurde ein Klebstoff gemäß der Rezeptur des Beispiels 1 hergestellt, jedoch mit einem EVA-Copolymeren der folgenden Spezifikation:
- Glastemperatur:: + 5°C
- Teilchendurchmesser: 0,5 bis 2,0 Mikrometer
- Viskosität:: ca. 4500 mPas (Brookfield Spindel 5, 20 UpM)
- pH-Wert:: ca. 3,5
- Feststoffgehalt:: 55 %
- Ethylengehalt:: ca. 20 %.

Man erhielt einen transparent auftrocknenden Klebstoff mit den Spezifikationen:
- pH-Wert:: ca. 4,5
- Festkörpergehalt:: ca. 55 %
- Viskosität:: 336000 mPas (Brookfield Spindel 5, 1 UpM)
- Ablüftezeit:: ca. 30 min (gemessen bei 23°C, 55 % rel. Luftfeuchte, dichter Untergrund, Zahnspachtelauftrag 230 g/m², Zahnspachtel A3 (s.o.)).

### Vergleichsbeispiel 3.

Nach der Rezeptur des Beispiels 1 wurde ein Kleber hergestellt, jedoch unter Verwendung einer EVA-Dispersion mit folgender Spezifikation:
- Glastemperatur:: - 28°C
- Teilchendurchmesser:: 0,5 bis 2,0 Mikrometer
- Viskosität:: ca. 5000 mPas (Brookfield Spindel 5, 20 UpM)
- pH-Wert:: ca. 3,5
- Feststoffgehalt:: ca. 55 %
- Ethylengehalt:: ca. 30 %.

Man erhielt einen transparent auftrocknenden Kleber mit den Spezifikationen:
- pH-Wert:: ca. 5
- Festkörpergehalt:: 55 %
- Viskosität:: 60400 mPas (Brookfield Spindel 5, 5 UpM)
- Ablüftezeit:: ca. 30 min
(gemessen bei 20°C, 55 % rel. Luftfeuchte, dichter Untergrund, Zahnspachtelauftrag 170 g/m², Zahnspachtel A3 (s.o.)).

Die vorstehend genannten Rezepturen wurden nach folgenden Kriterien getestet:
1. Die Anfangsklebkraft (initialer Tack) wurde durch Bestimmung des Schälwiderstandes (DIN 53278) 5 min nach Vereinigung der Substrate bestimmt.
2. Die Endklebkraft wurde durch Bestimmung der Scherfestigkeit und des Schälwiderstandes bei 14-tägiger Lagerung bei Raumtemperatur (DIN 53277, DIN 53278) ermittelt.
3. Die Weichmacherbeständigkeit wurde durch Schälwiderstandsmessung an wärmegelagerten PVC-Verklebungen ermittelt (DIN 16850, 7 Tage Raumtemperatur, 5 Tage 70°C, 2 Tage Raumtemperatur).

Die Prüfung der Oberflächenklebrigkeit erfolgte qualitativ.

Die Testung des bei Haftklebern unakzeptablen "kalten Flusses" erfolgte im Langzeitschertest (Nordtestmethode 1: Die Klebung z.B. eines 3 cm x 10 cm PVC-Belagstreifens auf eine senkrecht angebrachte Asbestzementplatte; Belastung: bei Umgebungstemperatur 4 Tage mit 2 kg, dann weitere 4 Tage mit insgesamt 4 kg und schließlich 4 weitere Tage mit insgesamt 6 kg; die Klebung darf sich nicht lösen; ein Klebstoff, der die Eigenschaft des kalten Flusses zeigt, erfüllt den Langzeitschertest nicht).

Die erhaltenen Ergebnisse sind in der folgenden Tabelle 1 zusammengefaßt. Wie die Testergebnisse zeigen, weisen die wäßrigen Kontaktkleber gemäß den Beispielen 1 und 2 ausgezeichnete Eigenschaften auf. Dagegen gibt das Vergleichsbeispiel 1 überhaupt keine guten Klebewerte; die Klebewerte des Vergleichsbeispiels 2 sind deutlich schlechter als diejenigen der Beispiele 1 und 2. Die mehr als 30 % Ethylen in dem eingesetzten Copolymeren enthaltende Rezeptur des Vergleichsbeispiels 3 ergibt oberflächenklebrige Produkte.

| | Beispiel | | Vergleichsbeispiel | | |
|---|---|---|---|---|---|
| Klebstoff nach Beispiel | 1 | 2 | 1 | 2 | 3 |
| Ablüftezeit (min) | 100 | 100 | 100 | 100 | 100 |
| Schälwiderstand 5 min nach Zusammenfügen | 19 | 10,4 | 3,0 | 2,8 | 2,8 |
| Scherfestigkeit 14 d RT N/cm² (PVC auf Buchenholz 50 mm/min) | 28,5 | 28,0 | 28,0 | 28,0 | 14,0 |
| Schälwiderstand 14 d RT N/cm² | 22 | 14,5 | 5,8 | 10,5 | 14,0 |
| Weichmacherbeständigkeit 14 d 70°C | 32 | 21,8 | 9,4 | 16,2 | 12,8 |
| Oberflächenklebrigkeit | keine | keine | keine | keine | stark |
| Langzeitschertest | + | + | (+) | + | - |
| + : bestanden (+): nicht von allen Prüflingen bestanden - : von keinem Prüfling bestanden | | | | | |

## Patentansprüche

1. Wäßriger Kontaktklebstoff auf Basis von EVA-Copolymeren, gekennzeichnet durch einen Gehalt an
a) EVA-Copolymeren mit einem Ethylengehalt von 23 bis 27 Gew.-% in Form wäßriger Dispersionen mit einem Feststoffgehalt von 40 bis 70 Gew.-%, wobei die EVA-Copolymere bis zu 3 Gew.-% weitere Copolymerkomponenten enthalten können,
b) 2 bis 15 Gew.-%, bezogen auf EVA-Copolymere, eines Harzes als "Tackifier" und
c) mit Wasser nicht mischbaren Lösemitteln in einer Menge von 0,1 bis 5 Gew.-%, bezogen auf das Gesamtgewicht der Dispersion,
sowie gegebenenfalls
d) üblichen Additiven wie Konservierungs-, Oxidations-, Verdickungs- und Thixotropierungsmitteln sowie Emulgatoren und Schutzkolloiden.

2. Kontaktklebstoff nach Anspruch 1, gekennzeichnet durch Balsamharz als "Tackifier".

3. Kontaktklebstoff nach Anspruch 1 oder 2, gekennzeichnet durch aromatische Kohlenwasserstoffe als mit Wasser nicht mischbare Lösemittel.

4. Verfahren zur Herstellung des wäßrigen Klebstoffes nach mindestens einem der Ansprüche 1 bis 3, dadurch gekennzeichnet, daß man
a) EVA-Copolymere mit einem Ethylengehalt von 23 bis 27 Gew.-% in Form wäßriger Dispersionen mit einem Feststoffgehalt von 40 bis 70 Gew.-%, wobei die EVA-Copolymere bis zu 3 Gew.-% weitere Copolymerkomponenten enthalten können mit
b) 2 bis 15 Gew.-%, insbesondere 5 bis 10 Gew.-%, bezogen auf EVA-Copolymere, eines Harzes als "Tackifier", insbesondere Balsamharz, gelöst in
c) mit Wasser nicht mischbaren Lösemitteln, insbesondere aromatischen Kohlenwasserstoffen in einer Menge von 0,1 bis 5 Gew.-%, bezogen auf das Gesamtgewicht der Dispersion,
versetzt und gut mischt sowie gegebenenfalls
d) übliche Additive wie Konservierungs-, Oxidations-, Verdickungs- und Thixotropierungsmittel sowie Emulgatoren und Schutzkolloide hinzufügt und ebenfalls homogen verteilt.

## Claims

1. A waterborne contact adhesive based on EVA copolymers, characterized by a content of
a) EVA copolymers containing 23 to 27% by weight ethylene in the form of aqueous dispersions having a solids content of 40 to 70% by weight, the EVA copolymers optionally containing up to 3% by weight of other copolymer components,
b) 2 to 15% by weight, based on EVA copolymer, of a resin as tackifier and
c) water-immiscible solvents in a quantity of 0.1 to 5% by weight, based on the total weight of the dispersion, and optionally,
d) standard additives, such as preservatives antioxidants, thickeners and thixotropicizing agents and also emulsifiers and protective colloids.

2. A contact adhesive as claimed in claim 1, characterized by balsam resin as the tackifier.

3. A contact adhesive as claimed in claim 1 or 2, characterized by aromatic hydrocarbons as the water-immiscible solvents.

4. A process for the production of the waterborne contact adhesive claimed in at least one of claims 1 to 3, characterized in that to an
a) EVA copolymer containing 23 to 27% by weight ethylene in the form of aqueous dispersions having a solids content of 40 to 70% by weight, the EVA copolymer optionally containing up to 3% by weight of other copolymer components,
is added
b) 2 to 15% by weight and more especially 5 to 10% by weight, based on EVA copolymer, of a resin as "tackifier", more particularly balsam resin, dissolved in
c) water-immiscible solvents, more aromatic hydrocarbons, in a quantity of 0.1 to 5% by weight, based on the total weight of the dispersion,
and, after thorough mixing,
d) standard additives, such as preservatives antioxidants, thickeners and thixotropicizing agents and also emulsifiers and protective colloids
are optionally added and likewise uniformly dispersed.

## Revendications

1. Colle aqueuse de contact à base de copolymères de EAV, caractérisée par le fait qu'elle contient
a) des copolymères de EAV ayant une teneur en éthylène de 23 à 27% en poids sous forme de dispersions aqueuses ayant une teneur en produits solides de 40 à 70% en poids, les copolymères de EAV pouvant contenir jusqu'à 3% en poids d'autres composants de copolymères,
b) de 2 à 15% en poids, rapportés aux copolymères de EAV, d'une résine comme "agent poisseux", et
c) des solvants non miscibles à l'eau en une quantité de 0,1 à 5% en poids, rapportée au poids total de la dispersion,
de même qu'éventuellement
d) des additifs habituels tels que des agents de conservation, des agents d'oxydation, des épaississants et des agents thixotropes, ainsi que des émulsionnants et des colloïdes de protection.

2. Colle de contact selon la revendication 1, caractérisée par de la résine tacamahaca comme "agent poisseux".

3. Colle de contact selon la revendication 1 ou 2, caractérisée par des hydrocarbures aromatiques à titre de solvants non miscibles à l'eau.

4. Procédé pour la préparation de la colle aqueuse selon au moins une des revendications 1 à 3, caractérisé en ce qu'on ajoute à
a) des copolymères de EAV ayant une teneur en éthylène de 23 à 27% en poids sous forme de dispersions aqueuses ayant une teneur en produits solides de 40 à 70% en poids, les copolymères de EAV pouvant contenir jusqu'à 3% en poids d'autres composants de copolymères,
b) de 2 à 15% en poids, en particulier de 5 à 10% en poids, rapportés aux copolymères de EAV, d'une résine comme "agent poisseux", en particulier de la résine tacamahaca dissoute dans
c) des solvants non miscibles à l'eau, en particulier des hydrocarbures aromatiques en une quantité de 0,1 à 5% en poids, rapportée au poids total de la dispersion,
et on mélange convenablement, tout en ajoutant éventuellement
d) des additifs habituels tels que des agents de conservation, des agents d'oxydation, des épaississants et des agents thixotropes, ainsi que des émulsionnants et des colloïdes de protection et on les répartit également de manière homogène.
